# EUROPÄISCHE PATENTANMELDUNG

(11) **EP 1 850 159 A2**
(43) Veröffentlichungstag der Anmeldung: **31.10.2007**
(21) Anmeldenummer: 07450081.0
(22) Anmeldetag: 26.04.2007
(51) Int. Cl.: G02B 6/38

(54) **Steckverbinder für ein Kabel, Kabel mit einem Steckverbinder und Verfahren zum Verbinden eines Kabels mit einem Steckverbinder**

(30) Priorität: 28.04.2006 AT 7362006
(71) Anmelder: I & T GmbH, 7011 Siegendorf (AT)
(72) Erfinder: Ziegler, Wolfgang, 76307 Karlsbad (DE)
(74) Vertreter: Wildhack, Helmut

(57) **Zusammenfassung**

Ein Steckverbinder für ein Kabel mit mindestens einem optischen Leiter (3) weist elektrische Anschlusskontakte und eine Vorrichtung zum Umwandeln von elektrischen Signalen in optische Signale (8) auf, wobei der optische Leiter (3) des Kabels mittels der Vorrichtung zum Umwandeln von elektrischen in optische Signale (8) mit mindestens einem elektrischen Anschlusskontakt verbindbar ist. Der Steckverbinder weist eine Leiterplatte (9) auf, welche mit mehreren elektrischen Anschlusskontakten verbindbar ist und auf welcher die Vorrichtung zur Umwandlung von elektrischen Signalen in optische Signale (8) angeordnet und elektrisch leitend verbunden ist. Der Steckverbinder weist ein Steckverbindergehäuse auf. Ein Kabel mit mindestens einem optischen Leiter (3) weist einen vorangehend beschriebenen Steckverbinder auf. Das Kabel kann ein Flachleiterkabel (1) oder ein Flachbandkabel sein und weist mindestens einen elektrischen Leiter (2) auf. Bei einem Verfahren zum Verbinden eines Kabels mit mindestens einem optischen Leiter (3) mit einem vorangehend beschriebenen Steckverbinder wird der optische Leiter (3) im Bereich des dem Steckverbinder zugewandten Kabelendes (5) aus dem Kabel herausgelöst und außerhalb des Kabelumfangs angeordnet und anschließend mit der Vorrichtung zum umwandeln von elektrischen Signalen in optische Signale (8) verbunden.

## Beschreibung

Die Erfindung betrifft ein Kabel mit Steckverbinder sowie einen Steckverbinder für ein Kabel und ein Verfahren gemäß dem Oberbegriff des Anspruches 9.

Optische Leiter können vorteilhaft zur Übertragung von Informationen mittels optischer Signale eingesetzt werden. Geeignete optische Leiter bieten im Vergleich zu elektrischen Leitern mit ähnlichen Abmessungen eine vielfach höhere Informationsübertragungsrate und sind weitestgehend unabhängig von elektromagnetischen Störeinflüssen. Optische Leiter können deshalb besonders vorteilhaft eingesetzt werden, wenn große Übertragungsraten oder eine hohe Störsicherheit erforderlich sind. Trotz der erhöhten und oftmals in der Verwendung einschränkenden mechanischen Anforderungen bei der Verlegung optischer Leiter und dem gegebenenfalls zusätzlichen Aufwand für die Umwandlung elektrischer in optische Signale wird verstärkt versucht, optische Leiter in sicherheitsrelevanten Umgebungen, wie beispielsweise in Kraftfahrzeugen, einzusetzen. Trotz einer zunehmenden Anzahl einzelner elektronischer Komponenten und der für deren Verbindung und einander erforderlichen Leitungen könnten mit der Verwendung optischer Leiter in Kraftfahrzeugen eine schnelle und störsichere Übertragung von Informationen und Steuersignalen erreicht und gewährleistet werden.

Es ist eine große Anzahl von Verbindungselementen, insbesondere von Steckverbindern für optische Leiter bekannt. Lediglich beispielhaft wird auf die Veröffentlichungen WO 01/42836 A2, WO 03/050579 A2 oder WO 2003/071328 A3 verwiesen. Die Qualität und damit die Zuverlässigkeit und die erreichbare Übertragungsrate bei Verbindungen von optischen Leitern hängt viel stärker als bei elektrischen Leitern von der Güte der mechanischen Ab- und optischen Ankopplung der jeweiligen Enden des optischen Leiters ab. Steckverbinder zum Einkoppeln optischer Signale in einen optischen Leiter erfordern deshalb im Vergleich zu elektrischen Leitungskontakten einen zusätzlichen konstruktiven Aufwand und eine erhöhte Sorgfalt bei der Herstellung und Handhabung von optischen Steckverbindern.

Es ist bereits bekannt, Kabel herzustellen und zu verwenden, die sowohl elektrische Leiter als auch optische Leiter für die Signal- und Informationsübertragung enthalten. Mit solchen Kabeln können bei sehr geringem Raumbedarf die jeweiligen Vorteile von elektrischen und optischen Leitern kombiniert werden. Üblicherweise werden die elektrischen Leiter und die optischen Leiter an den Kabelenden jeweils getrennten elektrischen bzw. optischen Steckverbindern zugeführt, wodurch sich die Herstellung und Handhabung derartiger Kabel aufwendig und kostenintensiv gestaltet. Selbst wenn elektrische und optische Anschlusskontakte in einem gemeinsamen Steckverbinder zusammengefasst werden, so ist dies auf Grund der unterschiedlichen Anforderungen bei der Herstellung von elektrischen und optischen Kopplungselementen sowie der für optische Kopplungen erforderlichen Präzision bei der Herstellung mit einem unangemessen hohen Aufwand verbunden, der für die elektrischen Verbindungen nicht erforderlich wäre.

Aufgabe der vorliegenden Erfindung ist es dem zu Folge, einen Steckverbinder für ein Kabel mit einem optischen Leiter so auszugestalten, dass dieser einfach und kostengünstig hergestellt werden kann und eine zuverlässige Verbindung und einfache Handhabung ermöglicht. Darüber hinaus sollte der Steckverbinder in einfacher Weise eine Kombination eines optischen Leiters mit elektrischen Leitern in einem gemeinsamen Kabel ermöglichen bzw. erleichtern.

Diese Aufgabe wird erfindungsgemäß gelöst durch einen Steckverbinder mit mindestens einem optischen Leiter mit elektrischen Anschlusskontakten und einer Vorrichtung zum Umwandeln von elektrischen Signalen in optische Signale, wobei der optische Leiter des Kabels mittels der Vorrichtung zum Umwandeln von elektrischen in optische Signale mit mindestens einem elektrischen Anschlusskontakt verbindbar ist.

Auf diese Weise wird erreicht, dass das Kabel einschließlich des darin geführten optischen Leiters ausschließlich über elektrische Anschlusskontakte kontaktiert und mit einer anzuschließenden Einrichtung verbunden werden kann. Obwohl das Kabel einen optischen Leiter enthält und auch die Signal- und Informationsübertragung optisch erfolgen kann, ist keine optische Koppelung mit externen Geräten erforderlich. Der Steckverbinder mit elektrischen Anschlusskontakten ist weitgehend unempfindlich gegenüber mechanischer Beanspruchung und Umgebungseinflüssen, die zu einer nachteiligen Beeinträchtigung einer optischen Koppelung und Verbindung führen könnten.

Vorzugsweise ist vorgesehen, dass die Vorrichtung zum Umwandeln von elektrischen Signalen in optische Signale eine optische Sende- und Empfangsvorrichtung aufweist. Ein geeigneter Sende- und Empfangsbaustein, beispielsweise ein opto-elektrischer Signalwandler, kann in unmittelbarer Nähe zu den elektrischen Anschlusskontakten angeordnet sein. Der opto-elektrische Signalwandler ist einerseits mit mindestens einem elektrischen Anschlusskontakt und andererseits mit dem optischen Leiter verbunden und wandelt die über den elektrischen Anschlusskontakt eingehenden elektrischen Signale in optische Signale um, die über den optischen Leiter übertragen werden können. Handelsüblich und kostengünstig erhältliche opto-elektrische Signalwandler sind in unterschiedlichen Ausführungsvarianten und mit unterschiedlichen Eigenschaften bekannt, so dass für die jeweiligen Anforderungen des Steckverbinders geeignete opto-elektrische Signalwandler vorgesehen und verwendet werden können.

Einer Ausgestaltung des Erfindungsgedankens zufolge ist vorgesehen, dass der Steckverbinder mehrere elektrische Anschlusskontakte aufweist, die mit der Vorrichtung zum Umwandeln von elektrischen Signalen in optische Signale verbindbar sind. So kann in einfacher Weise beispielsweise eine externe Energieversorgung für einen verwendeten Sende- und Empfangsbaustein über die elektrischen Anschlusskontakte mit diesem verbunden werden. Auch ist es möglich und für einige Anwendungen vorteilhaft, dass zusätzliche Messvorrichtungen sowie Steuer- und Regelfunktionen der Vorrichtung zum Umwandeln von elektrischen Signalen in optische Signale über die elektrischen Anschlusskontakte des Steckverbinders mit externen Steuer- und Auswertevorrichtungen verbunden werden können, ohne dass zusätzliche Verbindungsvorrichtungen, wie beispielsweise Anschlussstecker oder dergleichen erforderlich werden.

Es ist vorgesehen, dass der Steckverbinder eine Leiterplatte aufweist, welche mit mehreren elektrischen Anschlusskontakten verbindbar ist und auf welcher die Vorrichtung zur Umwandlung von elektrischen Signalen in optische Signale angeordnet und elektrisch leitend verbunden ist. Auf der Leiterplatte kann nicht nur der für eine Signalwandlung verwendete Sende- und Empfangsbaustein, sondern auch eine gegebenenfalls aus mehreren Einheiten bestehende Steuerungs- oder Regelungseinrichtung für den Signalwandler angeordnet und raumsparend in dem Steckverbinder untergebracht werden. Zumindest für einfache Steuerungs- oder Regelungsfunktionen könnte auf diese Weise auf externe Geräte verzichtet werden. Durch die Verwendung einer Leiterplatte kann auch die Herstellung und der Anschluss des Steckverbinders mit einem Kabel erleichtert werden, da zumindest die elektrische Kontaktierung der Signalwandlervorrichtung vorgefertigt kann.

Einer besonders raumsparenden und vorteilhaften Ausgestaltung des Erfindungsgedankens zufolge ist vorgesehen, dass der Steckverbinder ein mit einer Oberfläche des Kabels verbindbares Schaltungslayout aufweist, welches mit mehreren elektrischen Anschlusskontakten verbindbar ist und auf welcher die Vorrichtung zur Umwandlung von elektrischen Signalen in optische Signale angeordnet und elektrisch leitend verbunden ist. Ein geeignetes Schaltungslayout, dessen Herstellung und dessen elektrisch leitende Befestigung auf der Oberfläche eines Kabels werden beispielsweise in EP 1 424 882 A1 beschrieben. Insbesondere bei beengten Raumverhältnissen kann es zweckmäßig und vorteilhaft sein, auf eine gesonderte Platine zu verzichten und statt dessen ein Schaltungslayout in Form einer geeigneten Kupferfolie auf der Oberfläche des Kabels anzuordnen und elektrisch leitend zu verbinden. Auf Grund der Verformbarkeit derartiger Schaltungslayouts werden diese durch die oftmals unvermeidbaren mechanischen oder thermischen Beanspruchungen wesentlich weniger gefährdet als starre Platinen. Auch weisen Platinen ein höheres Eigengewicht auf und sind deshalb anfälliger gegen Vibrationen.

Um auch bei hoher mechanischer Beanspruchung eine Beschädigung während der Handhabung oder eine unerwünschte Beeinträchtigung während des Betriebs zu vermeiden ist vorgesehen, dass der Steckverbinder ein Gehäuse aufweist, in welchem die einzelnen Komponenten geschützt angeordnet sind. Im Inneren des Gehäuses können insbesondere der verwendete opto-elektrische Signalwandler untergebracht und der gegenüber mechanischer Beanspruchung und Umwelteinflüssen empfindliche Übergangsbereich in den optischen Leiter angeordnet werden. Die von außen zugänglichen elektrischen Anschlusskontakte können durch ihre Ausgestaltung oder Anordnung im Hinblick auf alle denkbaren Anforderungen ausreichend robust ausgeführt werden.

Die Erfindung betrifft auch ein Kabel mit mindestens einem optischen Leiter und mit einem vorangehend beschriebenen Steckverbinder. Das an beiden Kabelenden mit einem derartigen Steckverbinder versehene Kabel erfordert lediglich eine elektrische Kontaktierung über die Steckverbinder, so dass eine in der Herstellung und Handhabung aufwendige optische Kopplung bzw. Kontaktierung des in dem Kabel geführten optischen Leiters nicht notwendig wird. Das Kabel kann mit den Steckverbindern schnell und einfach mit anzuschließenden bzw. zu verbindenden Geräten verbunden bzw. wieder davon gelöst werden. Da das Kabel ausschließlich elektrische Anschlusskontakte aufweist, können auch unter ungünstigen Bedingungen eine zuverlässige und störungsfreie Kontaktierung gewährleistet werden.

Vorzugsweise ist vorgesehen, dass das Kabel auch mindestens einen elektrischen Leiter aufweist. Das Kabel kann ein Flachleiterkabel oder ein Flachbandkabel sein. Insofern bereits geeignete Kabel bekannt und kostengünstig erhältlich sind, die sowohl optische wie auch elektrische Leiter aufweisen, können diese für eine Verwendung mit den beschriebenen Steckverbindern vorgesehen werden. Auch ist es möglich, die Steckverbinder auf der dem Kabel abgewandten Anschlussseite an bereits bekannt und gegebenenfalls genormte Anschlüsse bzw. Anschlussbuchsen anzupassen, so dass ohne größeren Aufwand bislang verwendete Kabel mit ausschließlich elektrischen Leitern durch Kabel ersetzt werden können, die zumindest auch optische Leiter aufweisen. Auf diese Weise kann die Verwendungsbreite derartiger Kabel erhöht und eine schrittweise Umstellung und Migration erleichtert werden. Eine solche Ausgestaltung der Kabel ist insbesondere im Bereich des Kraftfahrzeugbaus von Vorteil, da die große Anzahl der bereits entwickelten elektronischen Komponenten weitgehend unverändert beibehalten werden kann und dennoch eine schnelle und störungsunanfällige Signalübertragung mittels optischer Leiter ermöglicht wird.

Vorzugsweise ist vorgesehen, dass der mindestens eine optische Leiter mindestens eine flexible Lichtleiterfaser aufweist. Flexible Lichtleiterfasern zeichnen sich durch eine große Übertragungsleistung bei einer für viele Anwendungen ausreichenden Verformbarkeit aus. Auch sind flexible Lichtleiterfasern weniger anfällig gegenüber mechanischer Beanspruchung und deshalb für eine Verwendung in Kraftfahrzeugen bevorzugt geeignet.

Einer besonders vorteilhaften Ausgestaltung des Erfindungsgedankens zufolge ist vorgesehen, dass der mindestens eine optische Leiter im Bereich des dem Steckverbinder zugewandten Kabelendes außerhalb des Kabelumfangs angeordnet und mit der ebenfalls außerhalb des Kabelumfangs angeordneten Vorrichtung zur Umwandlung von elektrischen Signalen in optische Signale verbunden ist. In diesem Zusammenhang wird mit einer Anordnung außerhalb des Kabelumfangs eine Anordnung bezeichnet, bei der sich der mindestens eine optische Leiter oder der Steckverbinder zumindest überwiegend außerhalb einer sämtliche in dem Kabel enthaltenden Leiter einhüllenden Umfangsfläche angeordnet ist, die in einem unversehrten Kabelabschnitt vorgegeben ist. Beispielsweise bedeutet außerhalb des Kabelumfangs bei einem Flachbandkabel außerhalb der durch die nebeneinander angeordneten Flachleiter definierten Ebene und außerhalb des Kabelumfangs eines Leiterbündels mit einem im Wesentlichen kreisförmigen Querschnitt außerhalb des das Leiterbündel einhüllenden Kreisumfangs.

Der aus dem Kabel einschließlich einer eventuell vorgesehenen Ummantelung heraus gelöste optische Leiter lässt sich außerhalb des Kabels einfach handhaben und schnell und zuverlässig mit einer Vorrichtung zur Umwandlung von elektrischen Signalen in elektrische Signale verbinden. Wird der optische Leiter über einen ausreichend langen Abschnitt aus dem Kabelverbund herausgelöst, so lässt er sich im Wesentlichen wie ein einzelner optischer Leiter mit dem zugeordneten opto-elektrischen Signalwandler verbinden. Die Herrichtung und Konnektierung einer größeren Anzahl optischer Leiter, die in dem Kabel zusammengefasst und geführt sind, kann deshalb entsprechend der Herrichtung eines einzelnen optischen Leiters erfolgen, ohne dass eine mangelnde Präzision bei der Verarbeitung und ein dadurch bewirkter Qualitätsverlust bei der Konnektierung zu befürchten wären.

Die Erfindung betrifft auch ein Verfahren zum Verbinden eines Kabels mit mindestens einem optischen Leiter mit einem Steckverbinder mit elektrischen Anschlusskontakten und mit einer Vorrichtung zum Umwandeln von elektrischen Signalen in optische Signale.

Erfindungsgemäß ist vorgesehen, dass der optische Leiter im Bereich des dem Steckverbinder zugewandten Kabelendes aus dem Kabel herausgelöst und außerhalb des Kabelumfangs angeordnet wird und anschließend der optische Leiter außerhalb des Kabelumfangs mit der Vorrichtung zum Umwandeln von elektrischen Signalen in optische Signale verbunden wird.

Einer Ausgestaltung des Erfindungsgedankens zufolge ist vorgesehen, dass der optische Leiter im Abstand zu dem dem Steckverbinder zugeordneten Kabelende durchtrennt wird, um ihn anschließend im Bereich des Kabelendes aus dem Kabel herauszulösen. Die stirnseitige Endfläche des optischen Leiters muss üblicherweise mit besonderer Sorgfalt hergestellt bzw. vorgegeben werden, da Unebenheiten oder Beschädigungen der Stirnfläche die Lichtausbeute und damit die Qualität der dort eingekoppelten optischen Signale nachteilig beeinflussen können. Um zu vermeiden, dass während einer vorbereitenden Kabelkonfektionierung oder anderen vorbereitenden Arbeitsschritten eine bereits hergestellte Stirnfläche des optischen Leiters beschädigt werden kann, ist vorgesehen, erst unmittelbar vor einer Verbindung des optischen Leiters mit dem zugeordneten opto-elektrischen Signalwandler diese Stirnfläche zu erzeugen und den optischen Leiter aus dem Schutz des Kabels bzw. einer diesen oder gegebenenfalls weiteren Leiter umhüllenden und gegebenenfalls isolierenden Ummantelung herauszulösen.

Vorzugsweise ist vorgesehen, dass der optische Leiter entlang einer U-förmigen Trennlinie durchtrennt und von dem seitlich umgebenden Kabelbereich gelöst wird. Dabei ist vorgesehen, dass der optische Leiter entlang der Grundlinie der U-förmigen Trennlinie durchtrennt wird, während die Seitenschenkel der U-förmigen Trennlinie parallel zum Verlauf des optischen Leiters diesen von dem seitlich umgebenden Kabelbereich trennen und aus diesem herauslösen. Die U-förmige Trennlinie kann beispielsweise durch eine Stanzung erzeugt werden.

Um die Auslenkung und Anordnung des optischen Leiters außerhalb des Kabelumfangs sowie die Verbindung des optischen Leiters mit der Vorrichtung zur Umwandlung von elektrischen Signalen in optische Signale zu unterstützen, ist vorgesehen, dass zum Herauslösen und anschließenden Verbinden des optischen Leiters zeitweise eine zumindest abschnittsweise keilförmige Auslenkvorrichtung so an dem Kabel angeordnet wird, dass eine Anschlagfläche der Auslenkvorrichtung den optischen Leiter auslenkt. Die Auslenkvorrichtung kann dabei ein Teil eines in geeigneter Weise ausgestalteten Stanzwerkzeugs sein und im Anschluss an einen Stanzvorgang den dabei heraus gelösten Bereich des optischen Leiters auslenken und für eine einfache Verbindung mit dem opto-elektrischen Signalwandler fixieren.

Nachfolgend wird ein Ausführungsbeispiel des Erfindungsgedankens näher erläutert, welches in der Zeichnung dargestellt ist. Es zeigt:
Fig. 1 eine Schrägansicht eines Kabelendes eines Flachleiterkabels mit drei elektrischen Leitern und einem optischen Leiter, die in einer Ebene angeordnet und von einer Schutzhülle umgeben sind,
Fig. 2 das in Fig. 1 dargestellte Kabelende, wobei der optische Leiter im Abstand zum Kabelende durchtrennt und außerhalb des Kabelumfangs angeordnet ist,
Fig. 3 eine Schrägansicht entsprechend der Fig. 1 und 2, wobei der optische Leiter außerhalb des Kabelumfangs mit einer Vorrichtung zum Umwandeln von elektrischen Signalen in optische Signale verbunden ist, die auf einer Leiterplatte angeordnet ist,
Fig. 4 eine Schnittansicht längs der Linie IV-IV in Fig. 3, wobei zur Veranschaulichung zusätzlich ein in den Fig. 1-3 nicht dargestelltes Steckverbindergehäuse dargestellt ist,
Fig. 5 eine Schrägansicht entsprechend der Fig. 3, wobei an Stelle der Leiterplatte ein Schaltungslayout auf einer Oberfläche des Flachleiterkabels angeordnet ist, und
Fig. 6 eine Schnittansicht längs der Linie VI-VI in Fig. 5 mit einem Steckverbindergehäuse entsprechend der Darstellung gemäß Fig. 4.

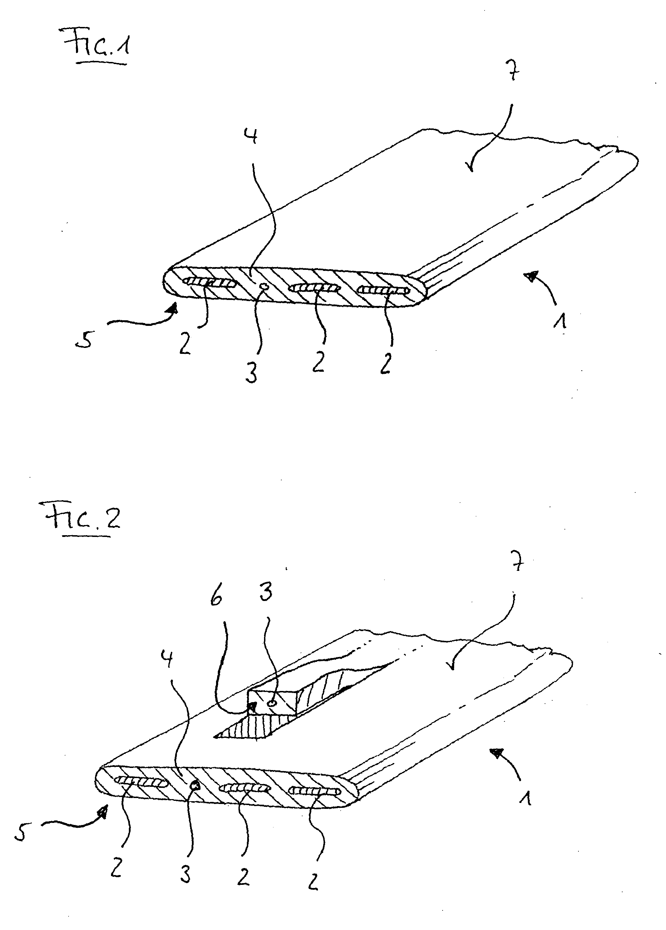

Ein in den Fig. 1-6 dargestelltes Flachleiterkabel 1 weist drei im Wesentlichen flache elektrische Leiter 2, die im Abstand zueinander in einer Ebene angeordnet sind. Zwischen zwei benachbarten elektrischen Leitern 2 ist ein optischer Leiter 3 angeordnet. Der optische Leiter 3 besteht aus einem Bündel von mehreren flexiblen Lichtleiterfasern. Die in einer Ebene angeordneten elektrischen Leiter 2 und der optische Leiter 3 werden von einer lichtundurchlässigen, elektrisch isolierenden Schutzhülle 4 umgeben.

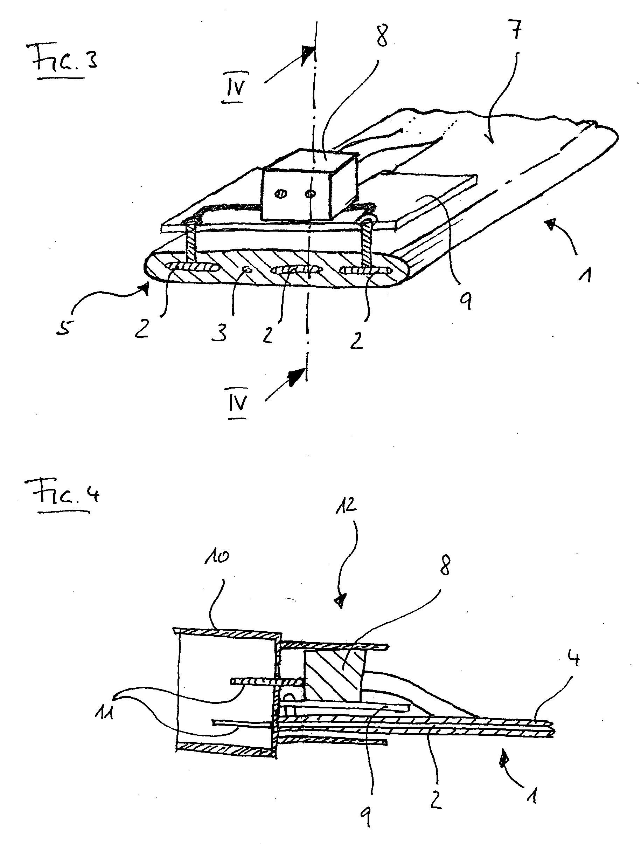

Um das in Fig. 1 dargestellte Flachleiterkabel mit einem Steckverbinder zu verbinden, wird zunächst wie in Fig. 2 dargestellt mittels einer U-förmigen Stanzung der optische Leiter 3 im Abstand zu einem Kabelende 5 durchtrennt und über einen vorgegebenen Abschnitt aus dem Flachleiterkabel 1 herausgelöst und ausgelenkt. Der soeben durchtrennte optische Leiter 3 befindet sich ausgehend von der durch den Trennvorgang erzeugten Stirnfläche 6 über den vorgegebenen Abschnitt außerhalb einer Oberfläche 7 der Schutzhülle 4, wie sie in einem unversehrten Kabelabschnitt vorgegeben und definiert wird. Das ausgelenkte Ende des optischen Leiters 3 ist dabei zum Schutz des optischen Leiters 3 vollständig von einem ebenfalls heraus gelösten Bereich der Schutzhülle 4 umgeben.

Zum Auslenken und gegebenenfalls Fixieren des heraus gelösten optischen Leiters 3 wird eine in Fig. 2 nicht dargestellte abschnittsweise keilförmige Abschnittsvorrichtung verwendet, die von der Unterseite an das Flachleiterkabel 1 gedrückt wird und deren Oberseite eine Anschlagfläche aufweist, die zur Auslenkung und Fixierung des optischen Leiters dient und daran angepasst ausgestaltet ist.

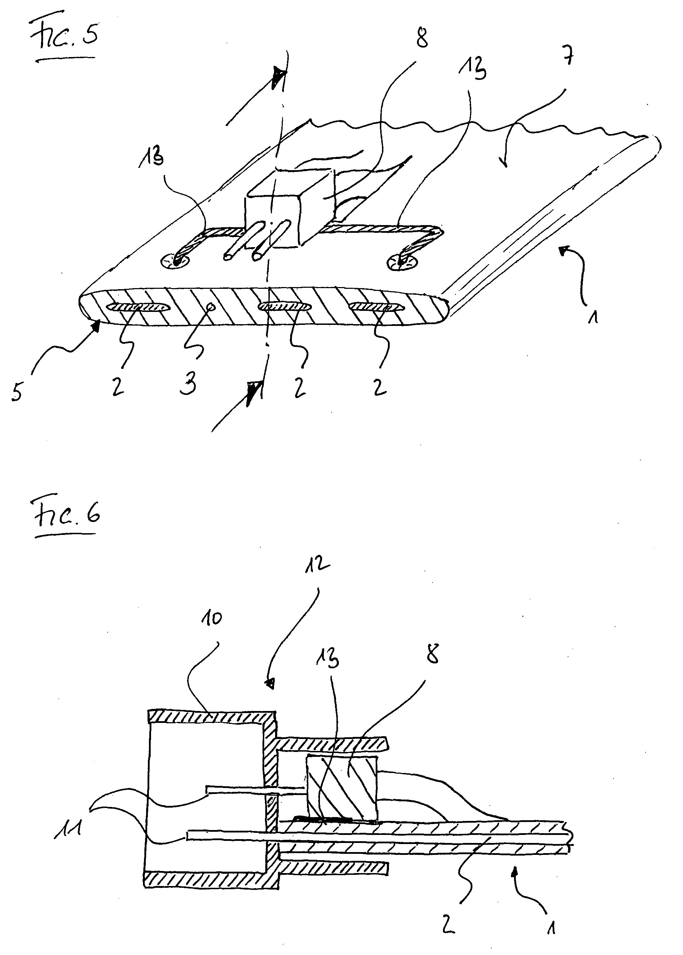

Das freie Ende des optischen Leiters 3 wird in einem nachfolgenden Arbeitsschritt mit einer Vorrichtung zum Umwandeln von elektrischen Signalen in optische Signale 8 verbunden. Die Vorrichtung 8 kann dabei beispielsweise aus einem opto-elektrischen Signalwandler bestehen. Die Vorrichtung 8 ist ihrerseits wie in den Fig. 3 und 4 dargestellt auf einer Leiterplatte 9 angeordnet und elektrisch leitend mit dieser verbunden. Die Leiterplatte 9 ist elektrisch leitend mit zwei elektrischen Leitern 2 verbunden.

Wie auch aus Fig. 4 ersichtlich, ist die Leiterplatte 9 im Abstand von der Schutzhülle 4 des Flachleiterkabels 1 angeordnet. Es ist jedoch auch möglich, die Leiterplatte 9 unmittelbar auf der Oberfläche 7 der Schutzhülle 4 anzuordnen und zu befestigen, sofern die Schutzhülle 4 aus einem elektrisch nicht leitenden Material besteht und eine Beschädigung der Leiterplatte 9 durch mechanische Beanspruchung ausgeschlossen werden kann.

In Fig. 4 ist beispielhaft dargestellt, wie ein Steckverbindergehäuse 10 das Kabelende 5 des Flachleiterkabels 1 einschließlich der Leiterplatte 9 und der darauf angeordneten Vorrichtung zum Umwandeln von elektrischen Signalen in optische Signale 8 schützend umgibt. Zur Außenseite durchgeführte elektrische Kontakte 11 sind elektrisch leitend mit den elektrischen Leitern 2 bzw. den dafür vorgesehenen Anschlüssen der Vorrichtung zum Umwandeln von elektrischen Signalen in optische Signale 8 verbunden.

Der aus den elektrischen Anschlusskontakten 11, der Leiterplatte 9, der Vorrichtung zur Umwandlung von elektrischen Signalen in optische Signale 8 und dem Steckverbindergehäuse 10 bestehende Steckverbinder 12 weist ausschließlich elektrische Anschlusskontakte 11 zur Verbindung und Konnektierung mit einem nicht dargestellten externen Gerät auf. Die für eine Übertragung in dem optischen Leiter 3 vorgesehenen optischen Signale werden in der Vorrichtung zur Umwandlung von elektrischen Signalen in optische Signale 8 im Inneren des Steckverbindergehäuses 10 erzeugt. Die Ansteuerung der Vorrichtung 8 erfolgt dabei über die elektrischen Anschlusskontakte 11.

In den Fig. 5 und 6 wird beispielhaft eine andere Ausführungsform dargestellt, bei welcher statt einer Leiterplatte 9 ein einfaches Schaltungslayout 13 in Form einer Kupferfolien auf der Oberfläche 7 des Flachleiterkabels 1 angeordnet und befestigt ist. Das Schaltungslayout 13 ist an zwei Stellen jeweils mit einem darunter liegenden flachen elektrischen Leiter 2 kontaktiert. Zum Herstellen des elektrischen leitenden Kontakts wurde in dem vorgesehenen Kontaktbereich die Schutzhülle von der Oberfläche 7 durchgehend bis zu dem elektrischen Leiter 2 entfernt und das Schaltungslayout 13 unmittelbar mit dem elektrischen Leiter 2 verbunden.

## Patentansprüche

1. Kabel mit Steckverbinder, wobei das Kabel mindestens einen elektrischen Leiter (2) und mindestens einen optischen Leiter (3) umfasst, der an eine Vorrichtung (8) zum Umwandeln von elektrischen Signalen in optische Signale angeschlossen ist, die mit mindestens einem elektrischen Anschlusskontakt (11) verbunden ist, der im Steckverbinder (12) gelegen ist, von dem weitere elektrische Anschlusskontakte aufgenommen sind, **dadurch gekennzeichnet,**
- **dass** der Steckverbinder (12) eine Leiterplatte (9) oder ein mit einer Oberfläche (7) des Kabels verbindbares Schaltungslayout (13) umfasst, welche(s) mit den elektrischen Anschlusskontakten (11) verbunden ist und auf bzw. mit welcher(m) die Vorrichtung (8) zur Umwandlung von elektrischen Signalen in optische Signale angeordnet bzw. elektrisch leitend verbunden ist und
- **dass** der mindestens eine optische Leiter (3) im Bereich des dem Steckverbinder (12) zugewandten Kabelendes (5) außerhalb des Kabelumfangs angeordnet und mit der ebenfalls außerhalb des Kabelumfangs angeordneten Vorrichtung (8) zur Umwandlung von elektrischen Signalen in optische Signale verbunden ist.

2. Kabel mit Steckverbinder nach Anspruch 1, **dadurch gekennzeichnet, dass** die Vorrichtung (8) zum Umwandeln von elektrischen Signalen in optische Signale eine optische Sende- und Empfangsvorrichtung aufweist.

3. Kabel mit Steckverbinder nach Anspruch 1, **dadurch gekennzeichnet, dass** der Steckverbinder (12) mehrere elektrische Anschlusskontakte (11) aufweist, die mit der Vorrichtung (8) zum Umwandeln von elektrischen Signalen in optische Signale verbunden sind.

4. Kabel mit Steckverbinder nach einem der Ansprüche 1 bis 3, **dadurch gekennzeichnet, dass** der Steckverbinder (12) ein Gehäuse (10) aufweist, von dem die Vorrichtung (8) und die Anschlusskontakte (11) aufgenommen sind.

5. Kabel mit Steckverbinder nach einem der Ansprüche 1 bis 4, **dadurch gekennzeichnet, dass** das Kabel (1) ein Flachleiterkabel oder ein Flachbandkabel ist und das Ende des optischen Leiters (3) aus der Ebene des Flachleiterkabels herausgebogen ist.

6. Kabel mit Steckverbinder nach einem der Ansprüche 1 bis 5, **dadurch gekennzeichnet, dass** der mindestens eine optische Leiter (3) mindestens eine flexible Lichtleiterfaser aufweist.

7. Kabel mit Steckverbinder nach einem das Ansprüche 1 bis 6 **dadurch gekennzeichnet, dass** die Leiterplatte (9) bzw. das Schaltungslayout (13) die elektrischen Leiter (2) des Kabels (1) mit den elektrischen Anschlusskontakten (11) des Steckverbinders leitungsmäßig verbinden.

8. Steckverbindung für ein Kabel, insbesondere ein Flachleiter- bzw. FlachbandKabel, mit einem einen Anschlussraum mit zumindest einen elektrischen Kontaktstift aufweisenden Gehäuse (10), **dadurch gekennzeichnet, dass** diese Kontaktstifte an eine von einer Leiterplatte (9) oder einem Schaltungslayout (13) getragene Vorrichtung (8) zur Umwandlung von elektrischen Signalen in optische Signale angeschlossen sind und diese Einrichtung (8) und die Leiterplatte (9) bzw. das Schaltungslayout (13) im Gehäuse (10) in einem weiteren Aufnahmeraum für das Ende des zu kontaktierenden Kabels angeordnet sind.

9. Verfahren zum Verbinden eines Kabels mit mindestens einem optischen Leiter mit einem Steckverbinder mit elektrischen Anschlusskontakten und mit einer Vorrichtung zum Umwandeln von elektrischen Signalen in optische Signale, **dadurch gekennzeichnet, dass** der optische Leiter (3) im Bereich des dem Steckverbinder (12) zugewandten Kabelendes (5) aus dem Kabel heraus gelöst, insbesondere aus der Ebene des Flachleiterkabels herausgebogenen und außerhalb des Kabelumfangs angeordnet wird, und anschließend der optische Leiter (3) außerhalb des Kabelumfangs mit der Vorrichtung zum Umwandeln von elektrischen Signalen in optische Signale (8) verbunden wird.

10. Verfahren nach Anspruch 19, **dadurch gekennzeichnet, dass** der optische Leiter (3) im Abstand zu dem dem Steckverbinder (12) zugeordneten Kabelende (5) durchtrennt und anschließend im Bereich des Kabelendes (5) aus dem Kabel herausgelöst wird.

11. Verfahren nach Anschluss 10, **dadurch gekennzeichnet, dass** der optische Leiter (3) entlang einer U-förmigen Trennlinie durchtrennt und von dem seitlich umgebenden Kabelbereich gelöst wird.

12. Verfahren nach einem der Ansprüche 9 bis 11, **dadurch gekennzeichnet, dass** zum Herauslösen und anschließenden Verbinden des optischen Leiters (3) zeitweise zumindest abschnittsweise eine keilförmige Auslenkvorrichtung so an dem Kabel angeordnet, insbesondere an das Kabel angelegt, wird, dass eine Anschlagfläche der Auslenkvorrichtung den optischen Leiter (3) auslenkt.
